# EUROPÄISCHE PATENTSCHRIFT

(11) **EP 1 397 020 B1**
(45) Veröffentlichungstag und Bekanntmachung des Hinweises auf die Patenterteilung: **27.05.2015**
(21) Anmeldenummer: 03102479.7
(22) Anmeldetag: 08.08.2003
(51) Int. Cl.: H04Q 11/04

(54) **Anordnung zur Sprach- und Datenkommunikation über eine gemeinsame Teilnehmeranschlussleitung**
Arrangement for voice and data communication over a common subscriber line
Dispositif de communication de voix et de données sur une ligne d'abonné commune

(30) Priorität: 03.09.2002 DE 10240651
(43) Veröffentlichungstag der Anmeldung: 10.03.2004
(73) Patentinhaber: Unify GmbH & Co. KG, 81379 München (DE)
(72) Erfinder: Schlagintweit, Martin, 85604 Zorneding (DE)
(74) Vertreter: Fritzsche, Thomas

(56) Entgegenhaltungen:
- WO-A-01/10166
- DE-A1- 19 963 247
- US-A- 5 991 311

## Beschreibung

Zur Sprachkommunikation vorgesehene Teilnehmeranschlussleitungen von öffentlichen oder privaten Kommunikationsnetzen werden in zunehmendem Maße auch zur Datenkommunikation genutzt. Bekannte Beispiele hierfür sind die unter dem Kürzel xDSL (x Digital Subscriber Line) zusammengefassten Übertragungstechnologien, die sehr hohe Datenübertragungsraten erlauben. Verbreitete xDSL-Technologien sind beispielsweise ADSL (Asynchronous Digital Subscriber Line), HDSL (High Bit Rate Digital Subscriber Line), VHDSL (Very High Bit Rate Digital Subscriber Line), VADSL (Very High Bitrate Asymmetrical Digital Subscriber Line) oder SDSL (Symmetric Digital Subscriber Line).

Bei der in öffentlichen Kommunikationsnetzen weit verbreiteten, sogenannten ADSL-Over-ISDN-Technologie wird neben einem für einen ISDN-Basisanschluss für Sprachverbindungen reservierten Frequenzbereich von 0 - 120 kHz ein über die Teilnehmeranschlussleitung physikalisch noch übertragbarer Frequenzbereich von 162 - 1102 kHz zur Datenübertragung genutzt. Da die angegebenen Frequenzbereiche disjunkt sind, können Sprache und Daten voneinander unabhängig und parallel über eine gemeinsame Teilnehmeranschlussleitung übertragen werden. Zu diesem Zweck werden Sprachendgeräte und Datenendgeräte über eine - häufig als Splitter bezeichnete - Frequenzweiche an die gemeinsame Teilnehmeranschlussleitung angekoppelt. Ein jeweiliges Sprachendgerät ist dabei über eine S₀- bzw. eine U_{K0}-Schnittstelle an den Splitter angeschlossen.

Da jedoch die ADSL-Over-ISDN-Technologie im Wesentlichen für öffentliche Kommunikationsnetze sowie deren Teilnehmeranschlussleitungen und Sprachendgeräte ausgelegt ist, ist der für die Sprachendgeräte verfügbare Leistungsmerkmalumfang erheblich eingeschränkt.

In WO 01/10166 A1 sind ein Verfahren und eine Vorrichtung zur gemeinsamen Übertragung von ISDN-und ADSL-Daten beschrieben, bei denen nicht zwei verschiedene Modulationsverfahren zur Übertragung von ADSL-und ISDN-Daten verwendet werden, sondern die ISDN-Daten in das ADSL-Band hinein moduliert werden. Der ISDN Datenstrom wird dabei auf dafür reservierte ADSL-Trägerfrequenzen moduliert.

Es ist Aufgabe der vorliegenden Erfindung, eine Anordnung zur Sprach- und Datenkommunikation über eine gemeinsame Teilnehmeranschlussleitung anzugeben die gegenüber der ADSL-over-ISDN-Technologie eine Erweiterung des für die Sprachendgeräte verfügbaren Leistungsmerkmalumfangs im Rahmen standardisierter, für öffentliche Kommunikationsnetze ausgelegte xDSL-Technologien erlaubt.

Gelöst wird diese Aufgabe durch eine Anordnung mit den Merkmalen des Patentanspruchs 1. Vorteilhafte Ausführungsformen und Weiterbildungen der Erfindung sind in den abhängigen Ansprüchen angegeben.

Zur Sprach- und Datenkommunikation über eine gemeinsame Teilnehmeranschlussleitung sind eine Datenkodierungseinrichtung zum Kodierten von im Rahmen der Datenkommunikation zu übertragenden Daten in Signale eines für Sprachverbindungen mit einem ersten Leistungsmerkmalumfang nicht genutzten, ersten Frequenzbereichs sowie eine Umsetzeinrichtung vorgesehen. Die Umsetzeinrichtung verfügt über eine Schnittstelle zum Anschluss eines einen zweiten Leistungsmerkmalumfang aufweisenden. Sprachendgeräts sowie zum Übertragen von in Signale eines zweiten Frequenzbereichs kodierten Daten, die im Rahmen von Sprachverbindungen mit dem zweiten Leistungsmerkmalumfang zu übermitteln sind. Die Umsetzeinrichtung weist außerdem Kodiermittel auf zum Umkodieren der Signale des zweiten Frequenzbereichs in Signale eines außerhalb des ersten Frequenzbereichs befindlichen, dritten Frequenzbereichs. Weiterhin ist eine Frequenzweiche zum Einspeisen der Signale des ersten und dritten Frequenzbereichs in die Teilnehmeranschlussleitung vorgesehen, wobei die Signale (S1, S3) des ersten (FB1) und dritten Frequenzbereichs (FB3) zusammen mit Sprachverbindungen mit dem ersten Leistungsmerkmalumfang über die Teilnehmeranschlussleitung (TL) übermittelbar sind.

Ein wesentlicher Vorteil der Erfindung besteht darin, dass eine standardisierte xDSL-Technologie auch in privaten Kommunikationsnetzen mit einem gegenüber öffentlichen Netzen erweiterten, zweiten Leistungsmerkmalumfang nutzbar ist. Entsprechende Sprachendgeräte mit erweitertem Leistungsmerkmalumfang weisen in der Regel eine Anschlussschnittstelle auf, deren Signalfrequenzbereich mit dem für die Datenübertragung genutzten, ersten Frequenzbereich überlappt. Durch die erfindungsgemaße Anordnung werden die über diese Schnittstelle übertragenen Signale in Signale eines außerhalb des ersten Frequenzbereichs befindlichen, dritten Frequenzbereichs umgesetzt und können so gemeinsam mit den zur Datenkommunikation genutzten Signalen ohne gegenseitige Störung über die Teilnehmeranschlussleitung übertragen werden.

Auf diese Weise kann ein erweiterter Leistungsmerkmalumfang zeitgemäßer privater Vermittlungseinrichtungen auch im Rahmen standardisierter, für öffentliche Kommunikationsnetze ausgelegter xOSL-Technologien genutzt werden.

Ein weiterer Vorteil der Erfindung besteht darin, dass vorhandene Sprachendgeräte sowie vorhandene xDSL-Baugruppen weiterverwendet werden können.

Ein Ausführungsbeispiel der Erfindung wird nachfolgend anhand der Zeichnung näher erläutert.

Dabei zeigen jeweils in schematischer Darstellung:
Figur 1 ein Kommunikationssystem zur Sprach- und Datenkommunikation über eine gemeinsame Teilnehmeranschlussleitung und
Figur 2 ein Frequenzdiagramm zur Veranschaulichung von zur Sprach- und Datenkommunikation genutzten Frequenzbereichen.

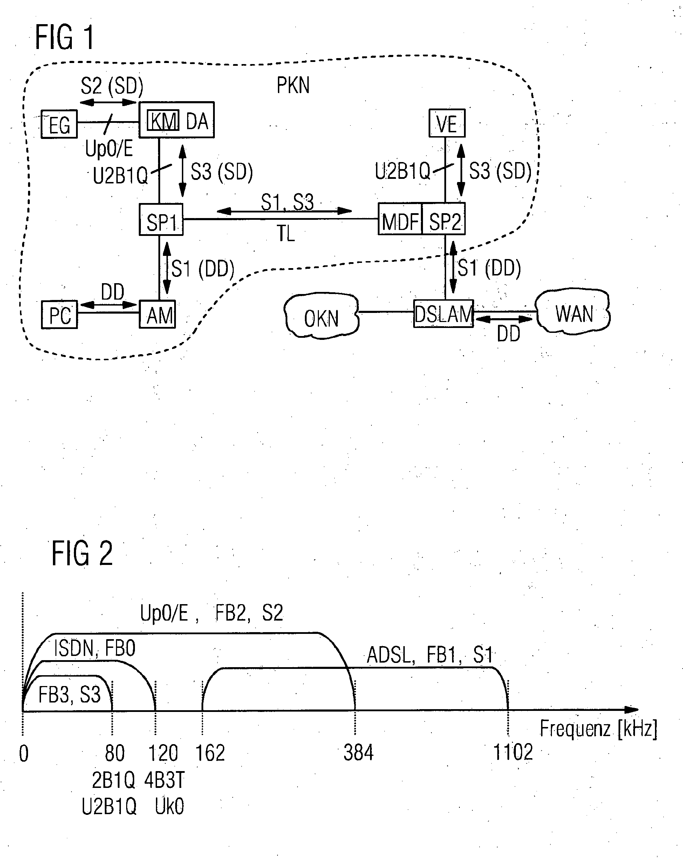

In **Figur 1** ist ein Kommunikationssystem zur Sprach- und Datenkommunikation über eine gemeinsame Teilnehmeranschlussleitung TL schematisch dargestellt. Die Teilnehmeranschlussleitung TL ist vorzugsweise eine Kupfer-Doppeladerleitung, wie sie häufig zum Anschluss von Teilnehmerendgeräten an öffentliche Kommunikationsnetze verwendet wird. Das Kommunikationssystem umfasst ein durch eine strichlierte Linie angedeutetes, privates Kommunikationsnetz PKN, ein öffentliches Kommunikationsnetz OKN, z.B. ein öffentliches Telefonnetz, sowie ein internetprotokollbasiertes Weitverkehrsnetz WAN, wie z.B. das Internet.

Gegenüber einem im öffentlichen Kommunikationsnetz OKN verfügbaren Leistungsmerkmalumfang, im folgenden als erster Leistungsmerkmalumfang bezeichnet, weist das private Kommunikationsnetz PKN einen erweiterten Leistungsmerkmalumfang, im folgenden als zweiter Leistungsmerkmalumfang bezeichnet, auf.

Das private Kommunikationsnetz PKN umfasst im vorliegenden Ausführungsbeispiel als Kommunikationseinrichtungen ein den zweiten Leistungsmerkmalumfang unterstützendes Sprachendgerät EG zur Sprachkommunikation, eine den zweiten Leistungsmerkmalumfang unterstützende Vermittlungseinrichtung VE sowie einen Personalcomputer PC zur Datenübertragung. Das Sprachend gerät EG weist eine U_{P0/E}-Schnittstelle auf, über die es an eine Umsetzeinrichtung DA angekoppelt ist. Die Umsetzeinrichtung DA weist neben der U_{P0/E}-Schnittstelle eine U2B1Q-Schnittstelle sowie Kodiermittel KM zur Protokollumsetzung und Signalumkodierung zwischen der U_{P0/E}- und der U2B1Q-Schnittstelle auf. Über die U2B1Q-Schnittstelle ist die Umsetzeinrichtung DA an eine Frequenzweiche SP1 gekoppelt. Im vorliegenden Ausführungsbeispiel ist die Frequenzweiche SP1 durch eine standardmäßige ADSL-Frequenzweiche, einen sogenannten Splitter realisiert.

Der Personalcomputer PC ist seinerseits über ein als Datenkodier- und Datendekodiereinrichtung wirkendes, sogenanntes ADSL-Modem AM an die Frequenzweiche SP1 angekoppelt.

Die Frequenzweiche SP1 ist über die Teilnehmeranschlussleitung TL an einen Hauptverteiler MDF (MDF: Main Distribution Frame) des privaten Kommunikationsnetzes PKN angeschlossen. An den Hauptverteiler NDF ist eine weitere Frequenzweiche SP2 in Form eines ADSL-Splitters gekoppelt. Die Frequenzweiche SP2 ist über eine U2B1Q-Schnittstelle mit der Vermittlungseinrichtung VE verbunden. Falls die Vermittlungseinrichtung VE nicht über eine U2B1Q-Schnittstelle verfügt, kann zwischen die Vermittlungseinrichtung VE und der Frequenzweiche SP2 optional eine weitere Umsetzeinrichtung (nicht dargestellt) zur Protokollumsetzung zwischengeschaltet werden.

Die Frequenzweiche SP2 ist weiterhin an einen DSL-Multiplexer DSLAM (Digital Subscriber Line Access Multiplexer) gekoppelt, an den weiterhin das öffentliche Kommunikationsnetz OKN sowie das Weitverkehrsnetz WAN angeschlossen sind. Der DSL-Multiplexer DSLAM dient dazu, mehrere ADSL-Leitungen zusammenzufassen und mit einer weiterführenden Datenübermittlungsein richtung, z.B. mit einem ATM-Switch (ATM: Asychronous Transfer Mode) zu verbinden. Im vorliegenden Ausführungsbeispiel fasst der DSL-Multiplexer DSLAM ADSL-Leitungen aus dem privaten Kommunikationsnetz PKN und aus dem öffentlichen Kommunikationsnetz OKN zusammen und leitet die darüber transportierten Daten in das Weitverkehrsnetz WAN weiter.

Im Folgenden sei eine Datenübertragung zwischen dem Personalcomputer PC und dem Weitverkehrsnetz WAN sowie eine Sprachverbindung zwischen dem Endgerät EG und der Vermittlungseinrichtung VE betrachtet, wobei die Sprachverbindung sowie die Datenübertragung gemeinsam über die Teilnehmeranschlussleitung TL geführt werden.

Im Rahmen der Datenübertragung werden Daten DD - vorzugsweise in Form von internetprotokollbasierten Datenpaketen - vom Personalcomputer PC zum ADSL-Modem AM übermittelt. Dieses kodiert die Daten DD in ADSL-Signale S1, die zur Frequenzweiche SP1 weitergeleitet werden. Die ADSL-Signale S1 werden in einem für ADSL-Datenübertragungen vorgesehenen, ersten Frequenzbereich FB1 von 162 kHz bis 1102 kHz übertragen.

Das in **Figur 2** dargestellte Frequenzdiagramm zeigt den für ADSL-Datenübertragungen reservierten, ersten Frequenzbereich FB1 in Relation zu den anderen für das vorliegende Ausführungsbeispiel relevanten Frequenzbereichen. Wie Figur 2 verdeutlicht, spart der erste Frequenzbereich FB1 denjenigen Frequenzbereich FB0 aus, der in öffentlichen Kommunikationsnetzen mit dem dort üblichen, ersten Leistungsmerkmalumfang für ISDN-Verbindungen reserviert ist. Bei ISDN-Anschlüssen über eine Uₖ₀-Leitungsschnittstelle mit 4B3T-Kodierung ist dies z.B. der Frequenzbereich von 0 - 120 kHz. Ansonsten schöpft der erste Frequenzbereich FB1 die bei durchschnittli chen Teilnehmeranschlussleitungen physikalisch verfügbare Übertragungsbandbreite weitgehend aus. Diese Art der ADSL-Datenübertragung wird häufig auch als ADSL-Over-ISDN bezeichnet. Entsprechend sind als ADSL-Modem AM und als Frequenzweiche SP1 vorzugsweise für ADSL-Over-ISDN ausgelegte Standardgeräte einzusetzen.

Im Rahmen der den zweiten Leistungsmerkmalumfang aufweisenden Sprachverbindung zwischen dem Endgerät EG und der Vermittlungseinrichtung VE werden Sprachkommunikationsdaten SD vom Endgerät EG zur Umsetzeinrichtung DA übermittelt. Die Sprachkommunikationsdaten SD umfassen in der Regel sowohl reine Sprachdaten als auch Signalisierungsinformation.

Die Sprachkommunikationsdaten SD werden in Form von elektrischen Signalen S2 über die U_{p0/E}-Schnittstelle übertragen. Die Signale S2 belegen, wie in Figur 2 dargestellt, einen zweiten Frequenzbereich FB2 von 0 - 384 kHz, der mit dem ersten Frequenzbereich FB1 überlappt. Der zweite Frequenzbereich FB2 ist breiter als der in öffentlichen Kommunikationsnetzen üblicherweise für ISDN-Sprachkommunikation reservierte Frequenzbereich FB0, da der erweiterte, zweite Leistungsmerkmalumfang des privaten Kommunikationsnetzes PKN gegenüber einem öffentlichen Kommunikationsnetz höhere Datenübertragungsraten, z.B. für Sprach- und Signalisierungsdaten, erfordert.

Die zur Umsetzeinrichtung DA übermittelten Signale S2 werden durch die Kodiermittel KM informationserhaltend in elektrische Signale S3 umkodiert. Die Signale S3 belegen einem gegenüber dem zweiten Frequenzbereich FB2 verengten, dritten Frequenzbereich FB3. Im vorliegenden Ausführungsbeispiel weisen die Signale S3 eine sogenannte 2B1Q-Kodierung mit einem Signalfrequenzbereich von 0 - 80 kHz als drittem Frequenzbe reich FB3 auf. Die 2B1Q-Kodierung benötigt bei gleicher Datenübertragungsrate eine geringere Frequenzbandbreite als die Kodierung der Signale S2. Figur 2 zeigt den von den Signalen S3 belegten, dritten Frequenzbereich FB3 im Vergleich zu den anderen oben genannten Frequenzbereichen FB1, FB2 und FB0.

Aufgrund der durch die Umsetzeinrichtung DA vorgenommenen Bandbreitenverengung befindet sich der dritte Frequenzbereich FB3 vollständig unterhalb des für ADSL-Datenübertragungen reservierten, ersten Frequenzbereichs FB1 und weist somit keine Überlappung mit dem ersten Frequenzbereich FB1 auf.

Die die Sprachkommunikationsdaten SD kodierenden Signale S3 werden von der Umsetzeinrichtung DA über die für die 2B1Q-Kodierung vorgesehene Schnittstelle U2B1Q zur Frequenzweiche SP1 übertragen. Die Frequenzweiche SB1 speist die von der Umsetzeinrichtung DA empfangenen Signale S3 des dritten Frequenzbereichs FB3 sowie die vom ADSL-Modem AM empfangenen Signale S1 des ersten Frequenzbereichs FB1 in die Teilnehmeranschlussleitung TL ein. Da der erste und der dritte Frequenzbereich nicht überlappen, können die Signale S1 und S3 bzw. die dadurch übertragenen Daten DD und SD parallel und gegenseitig unbeeinflusst über die Teilnehmeranschlussleitung TL und den Hauptverteiler MDF zur Frequenzweiche SP2 übermittelt werden.

Die Frequenzweiche SP2 trennt den ersten und den dritten Frequenzbereich wieder voneinander und überträgt entsprechend die die Sprachkommunikationsdaten SD kodierenden Signale S3 zur Vermittlungseinrichtung VE und die die Daten DD kodierenden Signale S1 zum DSL-Multiplexer DSLAM. Schließlich werden die Sprachkommunikationsdaten SD von der Vermittlungseinrich tung VE weitervermittelt und die Daten DD vom DSL-Multiplexer DSLAM in das Weitverkehrsnetz WAN weitergeleitet.
Aus Übersichtlichkeitsgründen wurde vorstehend nur eine Übertragungsrichtung, nämlich vom Endgerät EG in Richtung der Vermittlungseinrichtung VE bzw. vom Personalcomputer PC in Richtung des Weitverkehrsnetzes WAN betrachtet. Die vorstehenden Ausführungen lassen sich jedoch in sinngemäßer Weise auch auf eine Sprach- bzw. Datenübertragung in umgekehrter Richtung, d.h. von der Vermittlungseinrichtung VE zum Endgerät EG bzw. vom Weitverkehrsnetz WAN zum Personalcomputer PC anwenden. In diesem Fall speist die Frequenzweiche SP2 von der Vermittlungseinrichtung VE stammende Signale S3 des dritten Frequenzbereichs FB3 sowie vom DSL-Multiplexer DSLAM stammende Signale S1 des ersten Frequenzbereichs FB1 in die Teilnehmeranschlussleitung TL ein. Die eingespeisten Signale S1 und S3 werden daraufhin von der Frequenzweiche SP1 wieder getrennt, wobei die Signale S1 zum ADSL-Modem AM und die Signale S3 zur Umsetzeinrichtung DA übermittelt werden. Während das ADSL-Modem AM aus den Signalen S1 die damit transportierten Daten DD extrahiert und zum Personalcomputer PC übermittelt, kodieren die Kodiermittel KM die Signale S3 in Signale S2 des zweiten Frequenzbereichs FB2 um. Die Sprachkommunikationsdaten SD enthaltenden Signale S2 werden schließlich von der Umsetzeinrichtung DA über die U_{p0/E}-Schnittstelle zum Endgerät EG übertragen.

Weitere Ausführungsvarianten des vorliegenden Ausführungsbeispiels können z.B. dadurch realisiert werden, dass die U_{p0/E}-Schnittstelle durch eine allgemeine Uₚ₀-Schnittstelle und/oder die U2B1Q-Schnittstelle durch eine Uₖ₀-Schnittstelle und/oder die ADSL-Technologie durch eine andere xDSL-Technologie ersetzt wird.

## Patentansprüche

1. Anordnung zur Sprach- und Datenkommunikation über eine gemeinsame Teilnehmeranschlussleitung (TL), mit
a) einer Datenkodierungseinrichtung (AM) zum Kodieren von im Rahmen der Datenkommunikation zu übertragenden Daten (DD) in Signale (S1) eines für Sprachverbindungen mit einem ersten Leistungsmerkmalumfang nicht genutzten, ersten Frequenzbereichs (FB1),
b) einer Umsetzeinrichtung (DA) mit
- einer Schnittstelle (U_{p0/E}) zum Anschluss eines einen zweiten Leistungsmerkmalumfang aufweisenden Sprachendgeräts (EG) und zum Übertragen von in Signale (S2) eines zweiten Frequenzbereichs (FB2) kodierten Daten (SD), die im Rahmen von Sprachverbindungen mit dem zweiten Leistungsmerkmalumfang zu übermitteln sind,
**gekennzeichnet durch**
- von der Umsetzeinrichtung (DA) umfasste Kodiermittel (KM) zum Umkodieren der Signale (S2) des zweiten Frequenzbereichs (FB2) in Signale (S3) eines außerhalb des ersten Frequenzbereichs (FB1) befindlichen, dritten Frequenzbereichs (FB3), und
c) eine Frequenzweiche (SP1) zum Einspeisen der Signale (S1, S3) des ersten (FB1) und dritten (FB3) Frequenzbereichs in die Teilnehmeranschlussleitung (TL), wobei die Signale (S1, S3) des ersten (FB1) und dritten Frequenzbereichs (FB3) zusammen mit Sprachverbindungen mit dem ersten Leistungsmerkmalumfang über die Teilnehmeranschlussleitung (TL) übermittelbar sind.

2. Anordnung nach Anspruch 1,
**dadurch gekennzeichnet,**
**dass** die Datenkendierungseinrichtung (AM) und die Frequenzweiche gemäß einer xDSL-Technologie (x Digital Subscriber Line) ausgestaltet sind.

3. Anordnung nach einem der vorhergehenden Ansprüche,
**dadurch gekennzeichnete**
**dass** der zweite Frequenzbereich (FB2) ein Signalfrequenzbereich einer U_{p0/E}-Schnittstelle oder Uₚ₀-Schnittstelle ist.

4. Anordnung nach einem der vorhergehenden Ansprüche,
**dadurch gekennzeichnet,**
**dass** der dritte Frequenzbereich (FB3) ein Signalfrequenzbereich einer U2B1Q-Schnittstelle oder Uₖ₀-Schnittstelle ist.

5. Anordnung nach einem der vorhergehenden Ansprüche,
**dadurch gekennzeichnet,**
**dass** die Umsetzeinrichtung (DA) zum Umkodieren in eine 2B1Q-Kodierung oder 4B3T-Kodierung eingerichtet ist.

6. Anordnung nach einem der vorhergehenden Ansprüche,
**dadurch gekennzeichnet,**
**dass** die Umsetzeinrichtung (DA) eine Up_{0/E}- oder Uₚ₀-Schnittstelle zum Anschließen des Sprachendgeräts (EG) und eine U2B1Q- oder Uₖ₀-Schnittstelle zum Anschließen der Frequenzweiche (SP1) aufweist.

7. Anordnung nach einem der vorhergehenden Ansprüche,
**dadurch gekennzeichnet,**
**dass** die Kodiermittel (KM) derart ausgebildet sind, dass die Signale (S3) des dritten Frequenzbereichs (FB3) eine zu den Signalen (S2) des zweiten Frequenzbereichs (FB2) gleiche Datenübertragungsrate aufweisen.

8. Anordnung nach einem der vorhergehenden Ansprüche,
**dadurch gekennzeichnet,**
**dass** der dritte Frequenzbereich (FB3) gegenüber dem zweiten Frequenzbereich (FB2) verengt ist.

9. Anordnung nach einem der vorhergehenden Ansprüche,
**dadurch gekennzeichnet,**
**dass** der dritte Frequenzbereich (FB3) vollständig unterhalb des ersten Frequenzbereichs (FB1) angeordnet ist.

10. Anordnung nach einem der vorhergehenden Ansprüche,
**dadurch gekennzeichnet,**
**dass** der dritte Frequenzbereich (FB3) und der erste Frequenzbereich (FB1) nicht überlappend angeordnet sind.

11. Anordnung nach einem der vorhergehenden Ansprüche,
**dadurch gekennzeichnet,**
**dass** der erste Frequenzbereich (FB1) von 162 kHz bis 1102 kHz reicht.

12. Anordnung nach einem der vorhergehenden Ansprüche,
**dadurch gekennzeichnet,**
**dass** der dritte Frequenzbereich (FB1) von 0 kHz bis 80 kHz reicht.

13. Anordnung nach einem der vorhergehenden Ansprüche,
**dadurch gekennzeichnet,**
**dass** die in Signale (S1) des für Sprachverbindungen mit dem ersten Leistungsmerkmalumfang nicht genutzten, ersten Frequenzbereichs (FB1) kodierten Daten ADSL-Daten sind, die mittels ADSL-Over-ISDN über die Teilnehmeranschlussleitung (TL) übermittelbar sind.

14. Anordnung nach einem der vorhergehenden Ansprüche,
**dadurch gekennzeichnet,**
**dass** die Teilnehmeranschlussleitung (TL) eine Doppeladerleitung ist.

15. Verfahren zur Sprach- und Datenkommunikation über eine gemeinsame Teilnehmeranschlussleitung (TL), mit den Schritten
a) Kodieren von im Rahmen der Datenkommunikation zu übertragenden Daten (DD) in Signale (S1) eines für Sprachverbindungen mit einem ersten Leistungsmerkmalumfang nicht genutzten, ersten Frequenzbereichs (FB1),
b) Übertragen von in Signale (S2) eines zweiten Frequenzbereichs (FB2) kodierten Daten (SD) von einem einen zweiten Leistungsmerkmalumfang aufweisenden Sprachendgerät (EG), die im Rahmen von Sprachverbindungen mit dem zweiten Leistungsmerkmalumfang zu übermitteln sind, an eine Umsetzeinrichtung (DA),
**gekennzeichnet durch**
c) Umkodieren der Signale (S2) des zweiten Frequenzbereichs (FB2) in Signale (S3) eines außerhalb des ersten Frequenzbereichs (FB1) befindlichen, dritten Frequenzbereichs (FB3), und
d) Einspeisen der Signale (S1, S3) des ersten (FB1) und dritten (FB3) Frequenzbereichs in die Teilnehmeranschlussleitung (TL), wobei die Signale (S1, S3) des ersten (FB1) und dritten Frequenzbereichs (FB3) zusammen mit Sprachverbindungen mit dem ersten Leistungsmerkmalumfang über die Teilnehmeranschlussleitung (TL) übermittelt werden.

## Claims

1. Arrangement for voice and data communication over a common subscriber connection line (TL), with
a) a data coding device (AM) for coding data (DD) to be transmitted in the context of the data communication into signals (S1) of a first frequency range (FB1) which is not used for voice connections with a first performance feature extent,
b) a transcriber (DA) with
- an interface (U_{pO/E}) for the connection of a voice terminal (EG) comprising a second performance feature extent and for transferring data (SD) coded into signals (S2) of a second frequency range (FB2), data which are to be transmitted in the context of voice connections with the second performance feature extent,
**characterized by**
- coding means (KM) included in the transcriber (DA) for recoding the signals (S2) of the second frequency range (FB2) into signals (S3) of a third frequency range (FB3) outside of the first frequency range (FB 1), and
c) a frequency switch (SP1) for feeding the signals (S1, S3) of the first frequency range (FB1) and of the third frequency range (FB3) into the subscriber connection line (TL), wherein the signals (S1, S3) of the first frequency range (FB1) and of the third frequency range (FB3) can be transmitted together with voice connections with the first performance feature extent over the subscriber connection line (TL).

2. Arrangement according to Claim 1,
**characterized in**
**that** the data coding device (AM) and the frequency switch are designed according to an xDSL technology (x Digital Subscriber Line).

3. Arrangement according to any one of the preceding claims,
**characterized in**
**that** the second frequency range (FB2) is a signal frequency range of an U_{pO/E} interface or U_{pO} interface.

4. Arrangement according to any one of the preceding claims,
**characterized in**
**that** the third frequency range (FB3) is a signal frequency range of a U2B1Q interface or U_{kO} interface.

5. Arrangement according to any one of the preceding claims,
**characterized in**
**that** the transcriber (DA) is set up for recoding into a 2B1Q coding or 4B3T coding.

6. Arrangement according to any one of the preceding claims,
**characterized in**
**that** the transcriber (DA) comprises a U_{pO/E} or U_{pO} interface for connecting the voice terminal (EG) and a U2B1Q or U_{kO} interface for connecting the frequency switch (SP1).

7. Arrangement according to any one of the preceding claims,
**characterized in**
**that** the coding means (KM) are designed so that the signals (S3) of the third frequency range (FB3) have the same data transmission rate as the signals (S2) of the second frequency range (FB2).

8. Arrangement according to any one of the preceding claims,
**characterized in**
**that** the third frequency range (FB3) is narrow compared to the second frequency range (FB2).

9. Arrangement according to any one of the preceding claims,
**characterized in**
**that** the third frequency range (FB3) is arranged completely under the first frequency range (FB1).

10. Arrangement according to any one of the preceding claims,
**characterized in**
**that** the third frequency range (FB3) and the first frequency range (FB1) are not arranged with overlap.

11. Arrangement according to any one of the preceding claims,
**characterized in**
**that** the first frequency range (FB1) extends from 162 kHz to 1102 kHz.

12. Arrangement according to any one of the preceding claims,
**characterized in**
**that** the third frequency range (FB1) extends from 0 kHz to 80 kHz.

13. Arrangement according to any one of the preceding claims,
**characterized in**
**that** the data coded into signals (S1) of the first frequency range (FB1), which is not used for voice connections with the first performance feature extent, are ADSL data which can be transmitted by ADSL-Over-ISDN over the subscriber connection line (TL).

14. Arrangement according to any one of the preceding claims,
**characterized in**
**that** the subscriber connection line (TL) is a two-wire line.

15. Method for voice and data communication over a common subscriber connection line (TL), with the steps
a) coding of data (DD) to be transmitted in the context of the data communication into signals (S1) of a first frequency range (FB1) which is not used for voice connections with a first performance feature extent,
b) transmitting of data (SD) coded into signals (S2) of a second frequency range (FB2), from a voice terminal (EG) having a second performance feature extent, data which are to be transmitted in the context of voice connections with the second performance feature extent, to a transcriber (DA),
**characterized by**
c) recoding of the signals (S2) of the second frequency range (FB2) into signals (S3) of a third frequency range (FB3) outside of the first frequency range (FB1), and
d) feeding of the signals (S1, S3) of the first frequency range (FB1) and of the third frequency range (FB3) into the subscriber connection line (TL), wherein the signals (S1, S3) of the first frequency range (FB1) and the third frequency range (FB3) are transmitted together with voice connections with the first performance feature extent over the subscriber connection line (TL).

## Revendications

1. Système de communication vocale et de données sur une ligne de connexion d'abonné commune (TL), comprenant
a) un dispositif de codage de données (AM) pour coder des données (DD) devant être transmises dans le contexte de la communication de données en signaux (S1) d'une première gamme de fréquences (FB1) qui n'est pas utilisée pour des connexions vocales ayant un premier niveau de caractéristiques de performance,
b) un transcripteur (DA) avec
- une interface (U_{pO/E}) pour la connexion d'un terminal vocal (EG) comprenant un second niveau de caractéristique de performance et pour le transfert de données (SD) codées en signaux (S2) d'une deuxième gamme de fréquences (FB2), données qui doivent être transmises dans le contexte de connexions vocales ayant le second niveau de caractéristiques de performance,
**caractérisé par**
- des moyens de codage (KM) inclus dans le transcripteur (DA) pour recoder les signaux (S2) de la deuxième gamme de fréquence (FB2) en signaux (S3) d'une troisième gamme de fréquence (FB3) à l'extérieur de la première gamme de fréquence (FB1), et
c) un commutateur de fréquence (SP1) pour fournir les signaux (S1, S3) de la première gamme de fréquence (FB1) et de la troisième gamme de fréquence (FB3) à la ligne de connexion d'abonné (TL), les signaux (S1, S3) de la première gamme de fréquence (FB1) et de la troisième gamme de fréquence (FB3) pouvant être transmis conjointement avec les connexions vocales ayant le premier niveau de caractéristique de performance sur la ligne de connexion d'abonné (TL).

2. Système selon la revendication 1,
**caractérisé en ce que**
le dispositif de codage de données (AM) et le commutateur de fréquence sont conçus selon une technologie xDSL (ligne numérique d'abonné x).

3. Système selon l'une quelconque des revendications précédentes,
**caractérisé en ce que**
la deuxième gamme de fréquence (FB2) est une gamme de fréquence de signal d'une interface U_{pO/E} ou d'une interface U_{pO}.

4. Système selon l'une quelconque des revendications précédentes,
**caractérisé en ce que**
la troisième gamme de fréquence (FB3) est une gamme de fréquence de signal d'une interface U2B1Q ou d'une interface U_{kO}.

5. Système selon l'une quelconque des revendications précédentes
**caractérisé en ce que**
le transcripteur (DA) est paramétré pour le recodage en un codage 2B1Q ou un codage 4B3T.

6. Système selon l'une quelconque des revendications précédentes,
**caractérisé en ce que**
le transcripteur (DA) comprend une interface U_{pO/E} ou U_{pO} pour connecter le terminal vocal (EG) et une interface U2B1Q ou U_{kO} pour connecter le commutateur de fréquence (SP1).

7. Système selon l'une quelconque des revendications précédentes,
**caractérisé en ce que**
les moyens de codage (KM) sont conçus de telle sorte que les signaux (S3) de la troisième gamme de fréquence (FB3) ont le même débit de transmission de données que les signaux (S2) de la deuxième gamme de fréquence (FB2).

8. Système selon l'une quelconque des revendications précédentes,
**caractérisé en ce que**
la troisième gamme de fréquence (FB3) est étroite comparativement à la deuxième gamme de fréquence (FB2).

9. Système selon l'une quelconque des revendications précédentes,
**caractérisé en ce que**
la troisième gamme de fréquence (FB3) est agencée complètement en dessous de la première gamme de fréquence (FB1).

10. Système selon l'une quelconque des revendications précédentes,
**caractérisé en ce que**
la troisième gamme de fréquence (FB3) et la première gamme de fréquence (FB1) ne sont pas agencées avec un chevauchement.

11. Système selon l'une quelconque des revendications précédentes,
**caractérisé en ce que**
la première gamme de fréquence (FB1) s'étend de 162 kHz à 1102 kHz.

12. Système selon l'une quelconque des revendications précédentes,
**caractérisé en ce que**
la troisième gamme de fréquence (FB1) s'étend de 0 kHz à 80 kHz.

13. Système selon l'une quelconque des revendications précédentes,
**caractérisé en ce que**
les données codées en signaux (S1) de la première gamme de fréquence (FB1), qui ne sont pas utilisées pour des connexions vocales ayant le premier niveau de caractéristiques de performance, sont des données ADSL qui peuvent être transmises par ADSL sur ISDN sur la ligne de connexion d'abonné (TL).

14. Système selon l'une quelconque des revendications précédentes,
**caractérisé en ce que**
la ligne de connexion d'abonné (TL) est une ligne bifilaire.

15. Procédé de communication vocale et de données sur une ligne de connexion d'abonné commune (TL), comprenant les étapes suivantes
a) le codage de données (DD) devant être transmises dans le contexte de la communication de données en signaux (S1) d'une première gamme de fréquence (FB1) qui n'est pas utilisée pour des connexions vocales ayant un premier niveau de caractéristiques de performance,
b) la transmission de données (SD) codées en signaux (S2) d'une deuxième gamme de fréquence (FB2), depuis un terminal vocal (EG) ayant un second niveau de caractéristiques de performance, données qui doivent être transmises dans le contexte de connexions vocales ayant le second niveau de caractéristiques de performance, à un transcripteur (DA),
**caractérisé par**
c) le recodage des signaux (S2) de la deuxième gamme de fréquence (FB2) en signaux (S3) d'une troisième gamme de fréquence (FB3) à l'extérieur de la première gamme de fréquence (FB1), et
d) la fourniture des signaux (S1, S3) de la première gamme de fréquence (FB1) et de la troisième gamme de fréquence (FB3) à la ligne de connexion d'abonné (TL), les signaux (S1, S3) de la première gamme de fréquence (FB1) et de la troisième gamme de fréquence (FB3) étant transmis conjointement avec les connexions vocales ayant le premier niveau de caractéristique de performance sur la ligne de connexion d'abonné (TL).
